# EUROPÄISCHE PATENTSCHRIFT

(11) **EP 3 430 462 B1**
(45) Veröffentlichungstag und Bekanntmachung des Hinweises auf die Patenterteilung: **29.12.2021**
(21) Anmeldenummer: 17719801.7
(22) Anmeldetag: 07.03.2017
(51) Int. Cl.: G02B 21/24, G02B 21/34, B01L 9/00, B01L 3/00

(54) **VORRICHTUNG ZUM EINSETZEN IN EIN BILDGEBENDES SYSTEM**
DEVICE FOR INSERTING INTO AN IMAGING SYSTEM
DISPOSITIF DESTINÉ À ÊTRE UTILISÉ DANS UN SYSTÈME D'IMAGERIE

(30) Priorität: 15.03.2016 DE 102016104808
(43) Veröffentlichungstag der Anmeldung: 23.01.2019
(73) Patentinhaber: ALS Automated Lab Solutions GmbH, 07745 Jena (DE)
(72) Erfinder: BORNMANN, Gerd, 99427 Weimar (DE); EBERHARDT, Jens, 07546 Gera (DE)
(74) Vertreter: Carlsohn, Marc René
(86) Internationale Anmeldenummer: PCT/DE2017/100179
(87) Internationale Veröffentlichungsnummer: WO 2017/157382

(56) Entgegenhaltungen:
- WO-A1-03/008934
- FR-A1- 2 963 741
- JP-A- H0 989 774
- US-A- 5 306 467
- US-A1- 2002 109 838
- US-A1- 2005 196 857

## Beschreibung

Die Erfindung betrifft eine Vorrichtung, die zum Einsetzen in ein bildgebendes System bestimmt ist und eine Aufnahme für einen Probenträger aufweist. Sie betrifft ferner Anordnung mit einer solchen Vorrichtung, ein Kit mit einer solchen Anordnung und mehreren Probenträgern, ein bildgebendes System mit einer Aufnahme für eine solche Vorrichtung und ein Verfahren zur Betrachtung biologischer und/oder chemischer Proben unter Verwendung einer solchen Vorrichtung.

Aus WO 2008/034868 A2 sind eine Vorrichtung und ein Verfahren zur Entnahme von Zellen oder Zellkolonien aus einer Probe, die sich in einem Probenträger befindet, bekannt. Die Vorrichtung weist ein Mikroskop mit einer Reihe optischer Komponenten auf, insbesondere eine Anordnung aus Umlenkprismen und ein Linsensystem zur Strahlenführung und mikroskopischen Abbildung. Das Mikroskop ist mit einer Bildaufnahmeeinheit, in der Regel einer CCD-Kamera bzw. einem CCD-Feld, gekoppelt. Zur Verarbeitung der aus der Bildaufnahmeeinheit ausgelesenen Bildinformation ist eine Bildauswerteeinheit vorgesehen. Die Bildauswerteeinheit besteht aus einem Personalcomputer mit einer darauf ablaufenden Bildverarbeitungssoftware. Weiterhin ist eine Steuer- und Speichereinheit vorgesehen, die in den Personalcomputer integriert ist und deren Funktionen durch weitere Softwarekomponenten realisiert ist. Die Steuer- und Speichereinheit weist einen Monitor bzw. ein Display auf. Die Vorrichtung enthält weiterhin ein Erntewerkzeug, das auf einer Verfahrmechanik montiert ist. Die Verfahrmechanik besteht aus einer Hubsäule und einem Verfahrantrieb, die dem Heranführen des Erntewerkzeugs an die auf dem Probenträger befindliche Probe, einer Grobeinstellung des Erntewerkzeuges und einer Bewegung des Entnahmewerkzeugs an die entsprechenden Vereinzelungsstationen, d. h. die Abgabepositionen der entnommenen Zellen oder Zellkolonien, dienen.

Das in WO 2008/034868 A2 beschriebene Mikroskop ist ein Durchlichtmikroskop, das mit einer Fluoreszenzeinheit ausgerüstet sein kann. Hierzu ist eine Beleuchtung vorgesehen. Die Beleuchtung durchstrahlt die auf dem Probenträger befindliche Probe. Der Probenträger ist auf dem zum Mikroskop gehörenden Objekttisch befestigt, der in Form eines motorisierten xy-Tisches ausgebildet ist, so dass der Objekttisch mit dem Probenträger sowohl in x-, als auch in y-Richtung unter der optischen Anordnung aus der Beleuchtung und dem Umlenkprisma bewegt werden kann. Dabei werden die Stellkoordinaten des xy-Tisches an die Speicher- und Steuereinheit übertragen bzw. von der Speicher- und Steuereinheit eingestellt. Das Mikroskop weist ein Mikroskopstativ auf, das mit dem motorisierten xy-Tisch ausgerüstet ist. Außerdem ist die Bildaufnahmeeinheit mit CCD-Chip auf dem Mikroskop montiert, durch welche ein Abscannen der Probe auf dem Probenträger möglich ist. Zur Entnahme der Zellen bzw. Zellkolonien von dem Probenträger wird das Erntewerkzeug über der Probe abgesenkt. Die aufgenommenen Zellen bzw. Zellkolonien werden dann in einem Zielgefäß abgelegt.

In der Praxis hat sich herausgestellt, dass die Aufnahme der Zellen bzw. Zellkolonien weiter erleichtert werden könnte, wenn die Zellen bzw. Zellkolonien in stärkerem Maße auf dem Probenbehälter anhaften würden. Damit könnte sichergestellt werden, dass schnelle Bewegungen des Objekttisches, beispielsweise bei Scanningprozessen, oder bei Eintauchen des Erntewerkzeuges in die Probe keine Ortsveränderungen der Zellen oder Zellkolonien verursachen. Ferner wäre es möglich, Zellen oder Zellkolonien zu einem späterer Zeitpunkt wieder an den während des Scans ermittelten Koordinaten aufzufinden, um diese dann gezielteren optischen Untersuchungen zu unterziehen, sie zu entnehmen oder anderweitig zu behandeln. Allerdings darf diese Immobilisierung nicht soweit gehen, dass sich die Zellen bzw. Zellkolonien nicht mehr von dem Objektträger ablösen lassen. Eine dauerhafte Immobilisierung muss also verhindert werden. Damit scheidet die Anwendung eines Fixierungsmittels aus. Eine weitere Vorrichtung ist aus US2002/0109838A1 bekannt.

Aufgabe der Erfindung ist es, die Nachteile nach dem Stand der Technik zu beseitigen. Es soll insbesondere eine Vorrichtung angegeben werden, die eine bessere Immobilisierung einer Probe auf einem Probenträger erlaubt und die in ein bildgebendes System eingesetzt werden kann. Ferner sollen eine verbesserte Anordnung mit einer solchen Vorrichtung, ein Kit mit einer solchen Anordnung, ein bildgebendes System mit einer Aufnahme für eine solche Vorrichtung und ein Verfahren zur Betrachtung biologischer und/oder chemischer Proben unter Verwendung einer solchen Vorrichtung angegeben werden.

Diese Aufgabe wird durch die Merkmale der Ansprüche 1, 9, 12, 13 und 14 gelöst. Zweckmäßige Ausgestaltungen der Erfindungen ergeben sich aus den Merkmalen der Unteransprüche.

Nach Maßgabe der Erfindung ist eine Vorrichtung zum Einsetzen in ein bildgebendes System vorgesehen. Die Vorrichtung weist eine Aufnahme für einen Probenträger für eine Probe und eine Einrichtung zur Erzeugung eines magnetischen Feldes in einem Bereich der Aufnahme auf.

Die Einrichtung zur Erzeugung eines magnetischen Feldes wird im Folgenden als Magnetfeldeinrichtung bezeichnet. Der Bereich der Aufnahme, in dem erfindungsgemäß ein magnetisches Feld ausgebildet werden kann, wird im Folgenden als Magnetfeldbereich bezeichnet.

Der Magnetfeldbereich umfasst insbesondere das Teilgebiet der Aufnahme, in dem sich die zu analysierende Probe befindet, wenn der die Probe tragende Probenträger in die Aufnahme der erfindungsgemäßen Vorrichtung eingelegt ist. Das Teilgebiet der Aufnahme, in dem sich die Probe befindet, wenn der die Probe tragende Probenträger in die Aufnahme eingelegt ist, wird im Folgenden als Probenbereich bezeichnet. Der Probenbereich grenzt an die obere Flächenseite des Probenträgers an. Dabei kann es sich um eine Teilfläche der oberen Flächenseite des Probenträgers handeln. Eine solche Teilfläche ist der hydrophile Bereich des nachstehend beschriebenen erfindungsgemäßen Probenträgers.

Der Magnetfeldbereich und der Probenbereich können deckungsgleich sein. Der Magnetfeldbereich kann jedoch weitere Teilgebiete der Aufnahme umfassen, solange er den Probenbereich umfasst, wenn der eine Probe tragende Probenträger in die Aufnahme der erfindungsgemäßen Vorrichtung eingelegt ist. Befindet sich kein Probenträger in der Aufnahme, so ist der Magnetfeldbereich das Teilgebiet der Aufnahme, in dem die Magnetfeldeinrichtung ein magnetisches Feld erzeugen soll, und zwar zumindest das Teilgebiet der Aufnahme, in dem sich der Probenbereich befindet, wenn der Probenträger in die Aufnahme eingelegt worden ist, so dass an der oberen Flächenseite des Probenträgers das magnetische Feld ausgebildet ist. Ein Teilgebiet der Aufnahme ist ein Teil des Innenraumes der Aufnahme.

Das magnetische Feld kann in der gesamten Aufnahme ausgebildet sein. Der Magnetfeldbereich entspricht dann dem Innenraum der Aufnahme. Es kann jedoch vorgesehen sein, dass das magnetische Feld nur in einem oder mehreren Teilgebieten der Aufnahme ausgebildet ist. Diese Teilgebiete umfassen dann vorzugsweise das Teilgebiet der Aufnahme, das den Probenbereich bildet, wenn der Probenträger in die Aufnahme eingelegt ist. Es kann vorgesehen sein, dass sich das Magnetfeld nicht über den Innenraum der Aufnahme hinaus erstreckt. Auf diese Weise kann verhindert werden, dass das Magnetfeld auf andere Komponenten der bildgebenden Einrichtung oder andere Komponenten einer Vorrichtung oder Anordnung, beispielsweise einer Vorrichtung oder Anordnung zur Untersuchung biologischer Proben, einwirkt. Zur Begrenzung des Magnetfeldes kann die erfindungsgemäße Vorrichtung Abschirmelemente aufweisen.

Die erfindungsgemäße Vorrichtung ist insbesondere für die Untersuchung von biologischen und/oder chemischen Proben geeignet, die magnetische Partikel enthalten. Dazu können die biologischen und/oder chemischen Proben an die magnetischen Partikel gebunden sein. Beispiele derartiger magnetischer Partikel sind sogenannte "magnetic beads" oder Ferrofluide. Bei den biologischen Proben kann es sich beispielsweise um subzelluläre Bestandteile (z. B. Zellkerne), Zellen, Zellverbände, Gewebe, Zellkolonien, Zellkulturen oder Kombinationen davon handeln. Die biologische Probe enthält beispielsweise lebende Zellen, tote Zellen, vereinzelungsfähige Zellen, vereinzelungsfähige lebende Zellen, fixierte Zellen, fixierte tote Zellen oder Gemische dieser Zellen . Im chemischen Bereich können magnetische Partikel beispielsweise zur Anreicherung von Proteinen und/oder zur DNA-Extraktion verwendet werden. In einer Ausführungsform handelt es sich bei der Probe um Zellen, die in Suspension vorliegen und an die magnetischen Partikel haften. Unter Einwirkung des Magnetfeldes haften dann die Zellen über die magnetischen Partikel an der oberen Flächenseite des Probenträgers. Die erfindungsgemäße Vorrichtung ist beispielsweise für die Isolierung von Zellen aus immuno-magnetisch mit magnetischen Partikeln angereicherten Proben geeignet.

Beim Einlegen des die Probe tragenden Probenträgers in die Aufnahme der erfindungsgemäßen Vorrichtung gelangt die Probe in den Probenbereich der Aufnahme. Aufgrund der Einwirkung des erfindungsgemäß vorgesehenen Magnetfelds werden die magnetischen Partikel und mit ihnen die biologische und/oder chemische Probe, die die Partikel enthält, im Probenbereich auf dem Probenträger festgehalten, also immobilisiert, sobald dieser in die erfindungsgemäße Vorrichtung eingelegt ist. Es hat sich herausgestellt, dass auf diese Weise eine temporäre und reversible Immobilisierung der Probe auf der Oberfläche des Probenträgers erreicht werden kann, ohne die Probe dauerhaft auf dem Probenträger zu binden.

Bei dem bildgebenden System kann es sich um eine bildgebende Einrichtung, beispielsweise ein Mikroskop oder ein optisches Scanningsystem handeln. Die bildgebende Einrichtung kann eine Durchlichteinheit oder einer Fluoreszenzeinheit aufweisen. Das Mikroskop kann beispielsweise ein Durchlicht- oder Auflichtmikroskop sein. Das Mikroskop kann mit einer Fluoreszenzeinheit ausgestattet sein. Das bildgebende System kann eine Bilddatenverarbeitungseinheit und eine Bildspeichereinheit umfassen. Die mittels der erfindungsgemäßen Vorrichtung erreichte temporäre und reversible Immobilisierung der Probe auf dem Probenträger verhindert somit eine Bewegung, insbesondere ein Verrutschen der Probe und ihrer Bestandteile, auf dem Probenträger, selbst wenn der Probenträger einer Bewegung unterworfen ist. Die Probe und deren Bestandteile bleiben somit an dem Ort, an dem sie sich vor der Bilderfassung mittels der bildgebenden Einheit, also beispielsweise dem Scanvorgang, befanden. Damit wird sichergestellt, dass sich die Probe und deren Bestandteile auch nach der Bilderfassung noch am selben Ort befinden.

Vorzugsweise weist die erfindungsgemäße Vorrichtung einen Grundkörper auf, an dessen Oberseite eine Ausnehmung ausgebildet ist, die die Aufnahme für den Probenträger bildet. Die Ausnehmung sollte eine Tiefe aufweisen, die die Stärke des Probenträgers übersteigt. Auf diese Weise ist sichergestellt, dass das Magnetfeld auf eine biologische oder chemische Probe, die sich auf dem Probenträger befindet, einwirken kann.

Zweckmäßigerweise ist die Aufnahme für den Probenträger so gestaltet, dass der Probenträger sich in horizontaler Lage befindet, wenn er in die erfindungsgemäße Vorrichtung eingelegt ist. Unter horizontaler Lage wird eine Lage des Probenträgers verstanden, in der seine Flächenseiten zumindest annähernd in einer horizontalen Ebene liegen.

Vorzugsweise ist die Ausnehmung, die sich in dem Grundkörper befindet, von einer Auflageoberfläche begrenzt. Die Auflageoberfläche sollte von der Oberseite und der Unterseite des Grundkörpers beabstandet sein. Auf der Auflageoberfläche liegt der Probenträger auf, wenn er sich in der Ausnehmung befindet. Die Auflageoberfläche kann Überstände oder Vertiefungen aufweisen, so dass der Probenträger nur mit einem Teil seiner unteren Flächenseite auf der Auflageoberfläche aufliegt.

Die Ausnehmung kann jede beliebige Form aufweisen, solange sie so dimensioniert ist, dass der Probenträger in sie eingelegt werden kann. Die Ausnehmung kann einen rechteckigen, kreisförmigen oder kreuzförmigen Querschnitt aufweisen. Sie kann beispielsweise im Wesentlichen zylinderförmig, quaderförmig oder kreuzförmig sein . Der Ausdruck "im Wesentlichen" bedeutet, dass die Form keine ideale geometrische Form sein muss, sondern davon abweichen kann. Eine quaderförmige Ausnehmung wird im Folgenden als erste quaderförmige Ausnehmung bezeichnet. Die kreuzförmige Ausnehmung kann zusätzlich zur ersten quaderförmigen Ausnehmung eine zweite quaderförmige Ausnehmung aufweisen, welche die erste quaderförmige Ausnehmung kreuzt. Vorzugsweise kreuzt die zweite quaderförmige Ausnehmung die erste quaderförmige Ausnehmung mittig, bezogen auf deren Längsachse. Vorzugsweise verläuft die Längsachse der ersten quaderförmigen Ausnehmung orthogonal zur Längsachse der zweiten quaderförmigen Ausnehmung.

Die Breite und Länge der ersten quaderförmigen Ausnehmung sollten derart gewählt sein, dass der Probenträger in die erste quaderförmige Ausnehmung eingelegt werden kann. Dabei kann die Größe der ersten quaderförmigen Ausnehmung so bemessen sein, dass ihre Wandungen an den Kanten des Probenträgers anliegen, wenn der Probenträger in die erste quaderförmige Ausnehmung eingelegt ist. Die zweite quaderförmige Ausnehmung ermöglicht es, den Probenträger auf einfache Art und Weise in die erste quaderförmige Ausnehmung einzulegen oder aus dieser zu entnehmen. Vorzugsweise sind die im Kreuzungsbereich über die erste quaderförmige Ausnehmung überstehenden Abschnitte der zweiten quaderförmigen Ausnehmung so bemessen, dass diese Abschnitte als Eingriffe dienen können.

Der Durchmesser der zylinderförmigen Ausnehmung sollte derart gewählt sein, dass der Probenträger in die zylinderförmige Ausnehmung eingelegt werden kann. Dabei kann die Größe der zylinderförmigen Ausnehmung so bemessen sein, dass ihre Wandung an den Kanten des Probenträgers anliegt, wenn der Probenträger in die zylinderförmige Ausnehmung eingelegt ist.

Die erfindungsgemäße Vorrichtung kann ein oder mehrere Fixierungselemente umfassen, die eine temporäre Fixierung des Probenträgers in der Aufnahme ermöglichen. Diese Fixierungselemente können in der Ausnehmung ausgebildet sein. In einer Ausführungsform der Erfindung können Fixierungselemente vorgesehen sein, die einen Probenträger in der ersten quaderförmigen Ausnehmung fixieren. Beispielsweise kann ein Fixierungselement an einer Stirnseite der ersten quaderförmigen Ausnehmung ausgebildet sein, wobei das Fixierungselement den Probenträger gegen die gegenüberliegende Stirnwand der ersten quaderförmigen Ausnehmung drückt. Bei dem oder den Fixierungselementen kann es sich um Federelemente handeln. Die Federelemente können dabei so konfiguriert sein, dass die Feder mittels einer äußeren Kraft zusammengedrückt werden muss, wenn der Probenträger in die Ausnehmung eingelegt werden soll. Wird keine äußere Kraft auf die Feder ausgeübt, so versucht sich die Feder zurückzustellen, wodurch sie Kraft auf den eingelegten Probenträger ausübt und diesen so in der Ausnehmung fixiert. Soll der Probenträger aus der Ausnehmung wieder entnommen werden, so muss die Feder erneut mittels einer äußeren Kraft zusammengedrückt werden.

Die erfindungsgemäße Vorrichtung kann Führungselemente aufweisen, die das Einsetzen der Vorrichtung in ein bildgebendes System an einer vorgegebenen Position, beispielsweise auf einem Objekttisch der bildgebenden Einrichtung oder dem im Zusammenhang mit WO 2008/034868 A2 beschriebenen x,y-Tisch, erleichtern soll. Bei den Führungselementen kann es sich beispielsweise um Stifte, Bohrungen, schienenartige Überstände oder Einlässe handeln, die an den Außenflächen des Grundkörpers ausgebildet sind und in korrespondierende Führungselemente, die an dem bildgebenden System ausgebildet sind, eingreifen können.

Der Grundkörper hat zweckmäßigerweise eine quaderförmige oder zumindest annähernd quaderförmige Gestalt. Vorzugsweise ist der Abstand zwischen der Oberseite des Grundkörpers und seiner Unterseite geringer als die Breite oder Länge der Oberseite und der Unterseite, d. h. die Seitenwände haben eine geringere Höhe als die Länge und Breite der Oberseite und der Unterseite. Der Grundkörper hat dann eine plattenförmige Gestalt. An der Oberseite des Grundkörpers befindet sich die Ausnehmung, die die Aufnahme für den Probenträger bildet. Die Ausnehmung erstreckt sich von der Oberseite in Richtung der Unterseite bis zu der Auflageoberfläche für den Probenträger. Die Auflageoberfläche sollte von der Unterseite des Grundkörpers beabstandet sein. Die Auflageoberfläche begrenzt den Innenraum der Ausnehmung nach unten. Zweckmäßigerweise ist die Ausnehmung beabstandet von den Seitenwänden des Grundkörpers ausgebildet. Weist die Ausnehmung einen kreuzförmigen Abschnitt auf, so ist der Kreuzungspunkt zwischen den Längsachsen der ersten quaderförmigen Ausnehmung und der zweiten quaderförmigen Ausnehmung vorzugsweise auf einer Ache, die sich durch den Mittelpunkt der Oberseite und den Mittelpunkt der Unterseite des Grundkörpers, d. h. seiner Längsachse, erstreckt. Ist die Ausnehmung der erfindungsgemäßen Vorrichtung nur in Form einer einzigen quaderförmigen Ausnehmung, d. h. der ersten quaderförmigen Ausnehmung, ausgebildet, so liegt der Mittelpunkt der Längsachse dieser ersten quaderförmigen Ausnehmung zweckmäßigerweise auf der Längsachse des Grundkörpers. Der Grundkörper kann aus Kunststoff oder einem anderen geeigneten Material bestehen, das selbst nicht magnetisch sein sollte.

In der Unterseite des Grundkörpers kann eine Öffnung ausgebildet sein, die sich bis zur Auflageoberfläche erstreckt. Diese Öffnung kann schlitz- oder spaltförmig oder kreisrund sein. Die Öffnung erlaubt den Durchtritt von Licht von der Unter- und Oberseite zum Probenbereich. Das ist insbesondere bei Durchlicht- und Auflichtmikroskopie, mit oder ohne Nutzung von Fluoreszenz, vorteilhaft. Die Öffnung wird im Folgenden daher auch als Lichtdurchtrittsöffnung bezeichnet. Die Öffnung ist sowohl an der Unterseite des Grundköpers als auch an der Auflageoberfläche für den Probenträger offen.

Erfindungsgemäß ist die Magnetfeldeinrichtung in dem Grundkörper angeordnet. Bei der Magnetfeldeinrichtung kann es sich um einen oder mehrere, vorzugsweise zwei Dauermagneten, ein oder mehrere Elektromagneten oder Kombinationen davon handeln. Vorzugsweise ist die Magnetfeldeinrichtung unterhalb der Auflageoberfläche in dem Grundkörper angeordnet. Ist der Probenträger in die erfindungsgemäße Vorrichtung eingelegt, so befindet sich die Magnetfeldeinrichtung dann unterhalb der unteren Flächenseite des Probenträgers. Im Folgenden werden Dauermagneten und Elektromagneten gemeinsam als Magneten bezeichnet. Die Magnetfeldeinrichtung kann einen, zwei oder mehr Magneten aufweisen. Ist ein Elektromagnet vorgesehen, so kann es sich dabei um einen regelbaren Elektromagneten handeln.

Die Magneten sind vorzugsweise seitlich um den Probenbereich angeordnet. Bei den Magneten kann es sich ganz oder teilweise um schmale Magneten in Form von Blechen handeln. Bei inversen Mikroskopen kann vorgesehen sein, dass sich die Magneten im Grundkörper in einem Bereich befinden, der an die Oberseite des Grundkörper angrenzt und nach unten von der Ebene begrenzt wird, in der sich der Probenträger befindet, wenn dieser in die Aufnahme eingelegt ist. Dieser Bereich ist der obere Bereich des Grundkörpers. Bei aufrechten Mikroskopen kann vorgesehen sein, dass sich die Magneten im Grundkörper in einem Bereich befinden, der an die Unterseite des Grundkörper angrenzt und nach oben von der Ebene begrenzt wird, in der sich der Probenträger befindet, wenn dieser in die Aufnahme eingelegt ist. Dieser Bereich ist der untere Bereich des Grundkörpers.

Es ist vorteilhaft, dass mittels der Magnetfeldeinrichtung eine flache Ausbildung des Magnetfeldes im Probenbereich sichergestellt wird. Zu diesem Zweck sind Magnetfeldleiter in dem Grundkörper angeordnet. Mittels der Magnetfeldleiter kann eine Umleitung des Magnetfeldes erreicht werden. Bei den Magnetfeldleitern kann es sich beispielsweise um ferritische Bleche handeln. Die Anordnung der Magneten sollte nicht dazu führen, dass die magnetischen Partikel einseitigen seitlichen Kräften ausgesetzt werden. Damit soll verhindert werden, dass sich die magnetischen Partikel einseitig an einer Phasengrenze des Probenträgers oder außerhalb des Beobachtungsbereiches der bildgebenden Einrichtung anreichern. Unter einer flachen Ausbildung des Magnetfeldes wird in einer Ausführungsform der Erfindung eine Ausbildung verstanden, die sich über die obere Flächenseite des Probenträgers hinaus in Richtung der Flächennormalen des Probenträgers erstreckt, jedoch nicht über die Ausdehnung einer Probe, die sich auf dem Probenträger befindet, in dieser Richtung hinaus, wenn der Probenträger in die erfindungsgemäße Vorrichtung eingelegt ist. Die Einrichtung zur Erzeugung eines magnetischen Feldes kann somit Magnetfeldleiter umfassen. Vorzugsweise erstrecken sich die Magnetfeldleiter, ausgehend von einem Magneten, unterhalb einer Flächenseite des Probenträgers. Die Zahl der Magnetfeldleiter kann der Zahl der Magneten entsprechen.

Es kann vorgesehen sein, dass mittels der erfindungsgemäßen Vorrichtung Magnetfelder unterschiedlicher Stärke und/oder Lage erzeugt werden können. Dadurch ist es möglich, unterschiedlich große Kräfte auf die magnetischen Partikel auszuüben. Magnetfelder unterschiedlicher Stärker können durch Änderung der Geometrie der Magneten erzeugt werden. Weist die erfindungsgemäße Vorrichtung eine Magnetfeldeinrichtung auf, deren Magnetfeldstärke verändert werden kann, so kann das Magnetfeld an spezifische Eigenschaften der Probe, an spezielle Erfordernisse des Analyseverfahrens oder beides angepasst werden. Durch Einstellung der Stärke und/oder Lage des Magnetfeldes kann Einfluss auf die Positionierung der magnetischen Partikel im Magnetfeld genommen werden. Beispielsweise kann eine zentrisch, eher einseitig, lineare, punktförmige Anordnung oder eine Anordnung in Gruppen erreicht werden

Der Probenträger kann jede beliebige Form aufweisen, solange er eine Oberfläche aufweist, auf die eine Probe aufgebracht werden kann. Diese Oberfläche ist vorzugsweise auf einer Flächenseite des Probenträgers ausgebildet. Der Probenträger kann beispielsweise ein platten- oder scheibenförmiger Körper, wie ein Objektträger, oder ein schalenförmiger Körper, wie eine Petrischale, sein. Der Probenträger kann beispielsweise aus Glas oder Kunststoff bestehen. Es können Probenträger eingesetzt werden, die aus dem Stand der Technik im Zusammenhang mit der Mikroskopie oder anderen bildgebenden Einrichtungen bekannt sind. Es können aber auch speziell angepasste andere Probenträger verwendet werden, auch wenn das nicht erforderlich ist.

Ferner ist ein Probenträger vorgesehen, der insbesondere zum Einlegen in die erfindungsgemäße Vorrichtung geeignet ist. Der Probenträger weist eine Flächenseite auf, auf der zumindest ein hydrophiler Bereich und zumindest ein hydrophober Bereich ausgebildet ist. Diese Flächenseite des Probenträgers ist die Seite, auf die die Probe aufgebracht wird. Sie wird daher im Folgenden auch als Proben-Flächenseite bezeichnet. Es kann vorgesehen sein, dass einer oder mehrere hydrophile Bereiche von einem hydrophoben Bereich umgeben sind. Alternativ kann vorgesehen sein, dass einer oder mehrere hydrophobe Bereiche von einem hydrophilen Bereich umgeben sind. Ebenso können alternativ vorgesehen sein: ein oder mehrere hydrophile Bereiche, wobei jeder hydrophile Bereich jeweils von einem gesonderten hydrophoben Bereich umgeben ist, oder ein oder mehrere hydrophobe Bereiche, wobei jeder hydrophobe Bereich von einem gesonderten hydrophilen Bereich umgeben ist.

Vorzugsweise weist die Proben-Flächenseite eine Beschichtung aus einem hydrophoben Material auf, die den hydrophoben Bereich bildet und den hydrophilen Bereich umschließt. Bei dem hydrophoben Material kann es sich beispielsweise um einen Kunststoff mit Antihaft-Eigenschaften wie Polytetrafluorethylen (kommerziell unter den Namen "Teflon" erhältlich) handeln.

Der hydrophile Bereich ist vorzugsweise parallel zur Längsachse der ProbenFlächenseite ausgebildet, während der hydrophobe Bereich sich an den Rändern der Probenflächenseite befindet. Der hydrophile Bereich muss sich nicht über die gesamte Länge der Probenflächenseite erstrecken. Er erstreckt sich nicht über die gesamte Breite der Probenflächenseite. Vorzugsweise wird der hydrophile Bereich an seiner äußeren Kontur vollständig von dem hydrophoben Bereich auf der Probenflächenseite umgeben. Der hydrophile Bereich liegt somit nur nach oben hin frei. Wird eine wässerige Probe auf die Probenflächenseite des Probenträgers aufgebracht, so sammelt sich die Probe im hydrophilen Bereich des Probenträgers, während sie an den hydrophoben Rändern abgestoßen wird. Damit wird eine Festlegung der Probe auf dem Probenträger, genauer der Probenflächenseite erreicht. Weil der hydrophile Bereich nur einen Teil der Probenflächenseite einnimmt, befindet sich die Probe somit nur auf einer Teilfläche der Probenflächenseite. Beim Aufbringen der Probe auf die Probenflächenseite wird sie auf dieser Teilfläche konzentriert. Damit ist der Probenbereich festgelegt.

Wird der Probenträger in die erfindungsgemäße Vorrichtung eingelegt, so gelangt die Probe, die sich im hydrophilen Bereich der Probenflächenseite befindet, in den Magnetfeldbereich. Magnetische Partikel, die sich in der Probe befinden, werden dann unter Einwirkung des Magnetfeldes gehalten. Die Probenträger erlauben somit im Zusammenwirken mit der erfindungsgemäßen Vorrichtung eine doppelte Immobilisierung der Probe auf dem Probenträger, nämlich zum einen aufgrund der Wechselwirkungen zwischen den hydrophilen Komponenten der Probe mit dem hydrophilen Bereich der Probenflächenseite des Probenträgers und zum anderen aufgrund der Einwirkung des Magnetfeldes auf die magnetischen Partikel der Probe. Es ist daher ausreichend, wenn das Magnetfeld auf einen Bereich einwirkt, der an den hydrophilen Bereich angrenzt und sich von dort nach oben hin erstreckt. Das ist der Probenbereich. Es kann daher vorgesehen sein, dass der Magnetfeldbereich nur den Probenbereich umfasst, der erhalten wird, wenn die Probenträger verwendet werden. Dieser Probenbereich ist klein, weil er nur von einer Teilfläche der Proben-Flächenseite, nämlich dem hydrophilen Bereich, ausgeht.

Nach Maßgabe der Erfindung ist somit eine Anordnung vorgesehen, die die erfindungsgemäße Vorrichtung und den Probenträger umfasst. Vorzugsweise ist dabei der Magnetfeldbereich auf den Probenbereich begrenzt, der durch den oder die hydrophilen Bereiche der Proben-Flächenseite des Probenträgers bestimmt wird.

Nach Maßgabe der Erfindung ist ferner ein Kit vorgesehen, das die erfindungsgemäße Vorrichtung und einen oder mehrere der Probenträger umfasst. Vorzugsweise ist dabei der Magnetfeldbereich auf den Probenbereich begrenzt, der durch den oder die hydrophilen Bereiche der Proben-Flächenseite des Probenträgers bestimmt wird.

Nach Maßgabe der Erfindung ist darüber hinaus ein bildgebendes System vorgesehen, das eine Aufnahme für die erfindungsgemäße Vorrichtung aufweist. Bei der Aufnahme des bildgebenden Systems kann es sich beispielsweise um dessen Objekttisch, beispielsweise den oben im Zusammenhang mit WO 2008/034868 A2 beschriebenen x,y-Tisch oder einen Tisch handeln, der in x-, y- und z-Richtung bewegbar ist. Dieser Tisch wird im Folgenden als x,y,z-Tisch bezeichnet. Die erfindungsgemäße Vorrichtung sollte dabei so in der Aufnahme des erfindungsgemäßen bildgebenden Systems angeordnet sein, dass sich der Probenbereich der erfindungsgemäßen Vorrichtung im Strahlengang des bildgebenden Systems befindet. An dem Objekttisch, dem x,y-Tisch oder dem x,y,z-Tisch können Fixierungselemente zur Festlegung der erfindungsgemäßen Vorrichtung auf dem Tisch ausgebildet sein.

Nach Maßgabe der Erfindung ist eine Anordnung vorgesehen, die ein erfindungsgemäßes bildgebendes System und eine erfindungsgemäße Vorrichtung umfasst. Sie kann ferner einen Probenträger umfassen. Vorzugsweise ist dabei der Magnetfeldbereich der erfindungsgemäßen Vorrichtung auf den Probenbereich begrenzt, der durch den oder die hydrophilen Bereiche der ProbenFlächenseite des Probenträgers bestimmt wird.

Nach Maßgabe der Erfindung ist ferner ein Kit vorgesehen, das ein erfindungsgemäßes bildgebendes System und eine erfindungsgemäße Vorrichtung umfasst. Das Kit kann ferner einen oder mehrere Probenträger umfassen. Vorzugsweise ist dabei der Magnetfeldbereich der erfindungsgemäßen Vorrichtung auf den Probenbereich begrenzt, der durch den hydrophilen Bereich der ProbenFlächenseite des Probenträgers bestimmt wird.

Nach Maßgabe der Erfindung ist schließlich ein Verfahren zur Betrachtung biologischer und/oder chemischer Proben, die magnetische Partikel enthalten, vorgesehen. Das Verfahren umfasst die Schritte:
(a) Aufbringen der Probe auf einen Probenträger;
(b) Einlegen des Probenträgers in die Aufnahme einer erfindungsgemäßen Vorrichtung;
(c) Einsetzen der Vorrichtung in die Aufnahme eines erfindungsgemäßen bildgebenden Systems; und
(d) Analyse der Probe unter Verwendung des bildgebenden Systems.

Schritt (b) kann dabei vor Schritt (a) ausgeführt werden, so dass die Probe erst dann auf dem Probenträger aufgebracht wird, wenn der Probenträger bereits in die Aufnahme der erfindungsgemäßen Vorrichtung eingelegt worden ist.

Schritt (d) kann eine bioanalytische und/oder chemische Auswertung der Probe umfassen. Alternativ oder zusätzlich kann Schritt (d) auch eine Entnahme von Komponenten der Probe, beispielsweise von Zellen, umfassen. Dazu kann ein Erntewerkzeug verwendet werden, beispielsweise das in WO 2008/034868 A2 beschriebene Erntewerkzeug.

Bei der Analyse in Schritt (d) kann es sich im einfachsten Fall um eine Bildbetrachtung handeln. Es kann sich bei der Analyse in Schritt (d) aber auch um einen komplexeren Vorgang handeln, beispielsweise kann die Analyse eine Auswertung des erhaltenen Bildes mittels bildanalytischer Verfahren, eine physikalische Analyse oder eine chemische Analyse sein. Die physikalische Analyse kann beispielsweise eine Analyse unter Nutzung von Fluoreszenz, die chemische Analyse beispielsweise eine Analyse unter Nutzung von Lumineszenz sein.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische perspektivische Darstellung einer Ausführungsform der erfindungsgemäßen Vorrichtung;
- Fig. 2: eine schematische perspektivische Darstellung der in Fig. 1 gezeigten Ausführungsform der erfindungsgemäßen Vorrichtung, in deren Ausnehmung eine Ausführungsform eines Probenträgers eingelegt ist;
- Fig. 3: eine schematische Draufsicht auf die bereits in Fig. 2 gezeigte Ausführungsform eines Probenträgers;
- Fig. 4: vereinfachte Schnittdarstellungen durch die in Fig. 2 mit eingelegtem Probenträger gezeigte Ausführungsform der erfindungsgemäßen Vorrichtung, wobei eine Probe auf dem Probenträger ausgebracht ist (Fig. 4a: Schnitt entlang Linie A--A von Fig. 2; Fig. 4b: Schnitt entlang Linie B--B von Fig. 2);
- Fig. 5: einen Ausschnitt einer photographischen Aufnahme, die mittels eines erfindungsgemäßen Mikroskops erhalten wurde, in vergrößerter Darstellung; und
- Fig. 6: einen erneut vergrößerten Ausschnitt aus dem in Fig. 5 gezeigten Ausschnitt.

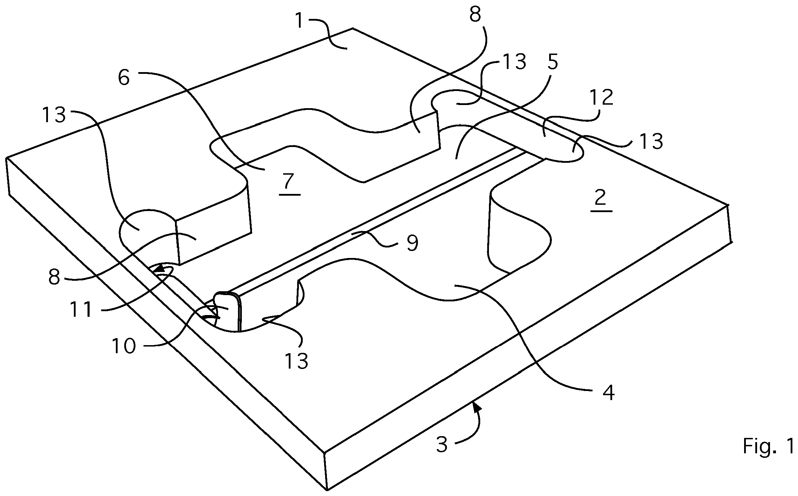

Die in Fig. 1 gezeigte Ausführungsform der erfindungsgemäßen Vorrichtung weist einen quader-, genauer plattenförmigen Grundköper 1 mit einer Oberseite 2 und einer Unterseite 3 auf. In der Oberseite ist eine Ausnehmung 4 ausgebildet, die einen kreuzförmigen Querschnitt mit einer ersten quaderförmigen Ausnehmung 5 und einer zweiten quaderförmigen Ausnehmung 6 aufweist. Die erste quaderförmige Ausnehmung 5 und die zweite quaderförmige Ausnehmung 6 bilden gemeinsam die Ausnehmung 4.

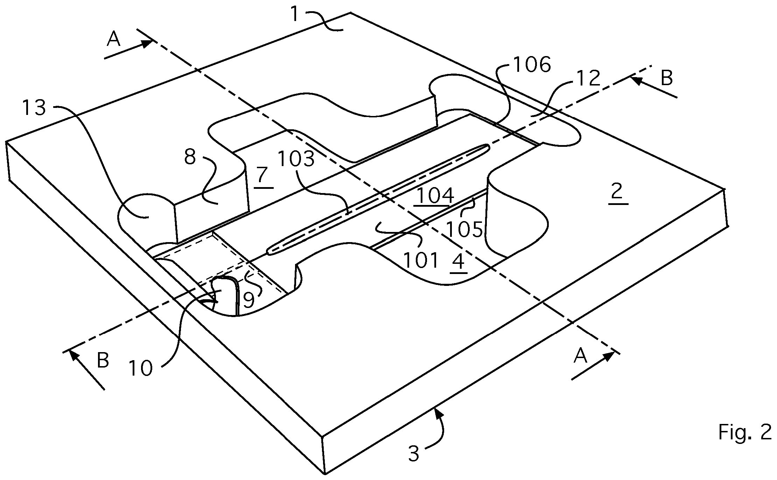

Die zweite quaderförmige Ausnehmung 6 verläuft orthogonal zur ersten quaderförmigen Ausnehmung 5. Dabei schneiden sich die Längsachse der ersten und zweiten quaderförmigen Ausnehmungen 5, 6 jeweils an ihrem Mittelpunkt. Die Ausnehmung 4 wird nach unten durch die Auflageoberfläche 7 begrenzt. Die Breite der ersten quaderförmigen Ausnehmung 5 ist so gewählt, dass die die erste quaderförmige Ausnehmung 5 begrenzenden Längswandungen 8 der ersten quaderförmigen Ausnehmung 5 an die Längskanten 105 des Probenträgers 101 angrenzen, wenn der Probenträger 101 in die Ausnehmung 4 eingelegt ist (siehe Fig. 2). Die Länge der ersten quaderförmigen Ausnehmung übersteigt die Länge des Probenträgers 101 geringfügig um einen Überstand, um das Einlegen und Entnehmen des Probenträgers zu ermöglichen. Dieser Überstand wird von einem Federelement 10 überbrückt. An den Stirnseiten 11, 12 der ersten quaderförmigen Ausnehmung 5 - die von den Querwandungen der Ausnehmung 4 gebildet werden - weist die erste quaderförmige Ausnehmung verbreiterte Abschnitte 13 auf. Der Abstand zwischen Oberseite 2 und Unterseite 3 des Grundkörpers 1 ist größer als die Tiefe der Ausnehmung 4.

In der Unterseite 3 des Grundkörpers 1 ist eine spaltförmige Lichtdurchtrittsöffnung 9 ausgebildet. Die Lichtdurchtrittsöffnung 9 erstreckt sich dabei von der Unterseite 3 bis zur Auflageoberfläche 7. Die Lichtdurchtrittsöffnung ist an der Unterseite 3 des Grundköpers und an der Auflageoberfläche 7 für den Probenträger offen. Sie verläuft parallel zur Längsachse der ersten quaderförmigen Ausnehmung 5, wobei sie von den Längswandungen 8 der Ausnehmung 4 beabstandet ist. Dabei erstreckt sie sich von der ersten Stirnseite 11 der ersten quaderförmigen Ausnehmung 5 bis zu dessen zweiter Stirnseite 12.

An der ersten Stirnseite 11 befindet sich das als Fixierungselement dienende Federelement 10, das den Probenträger 101 mit einer Stirnseite 106 gegen die zweite Stirnseite 12 der ersten quaderförmigen Ausnehmung 5 drückt, sofern kein äußerer Druck, beispielsweise durch einen Bediener, auf das Federelement 10 ausgeübt wird.

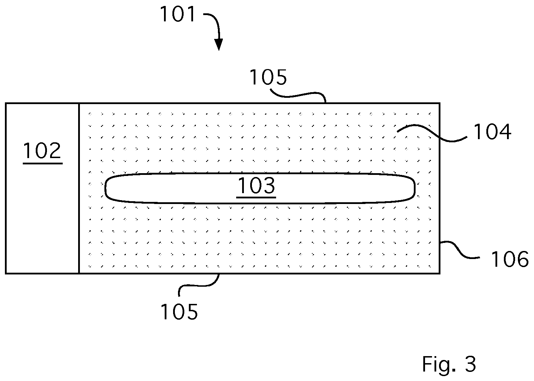

In Fig. 2 ist ein Probenträger 101 in die Ausnehmung 4 der erfindungsgemäßen Vorrichtung eingelegt. Der gezeigte Probenträger 101 ist eine Glasplatte mit einer Flächenseite 102, die eine Beschichtung aus einem hydrophoben Material aufweist (Fig. 3). Mittels dieser Beschichtung wird auf der Flächenseite ein hydrophober Bereich 104 erhalten. Der hydrophobe Bereich umschließt einen langgestreckten hydrophilen Bereich 103, der von der Oberfläche der Flächenseite 102 gebildet wird. Die Längsachse des hydrophilen Bereichs 103 verläuft auf der Längsachse der Flächenseite 102. Der hydrophobe Bereich 104 erstreckt sich von dem hydrophilen Bereich bis zu den Längskanten 105 und einer Querkante 106 der Flächenseite 102. Weil der hydrophile Bereich 103 zu dieser Querkante 106 geringer beabstandet ist als zur anderen Querkante 106 der Flächenseite 102, erstreckt sich auch der hydrophobe Bereich nicht bis zu dieser anderen Querkante 106 der Flächenseite 102. Auf die Flächenseite 102 wird die Probe aufgebracht. Die Flächenseite 102 ist somit die Proben-Flächenseite.

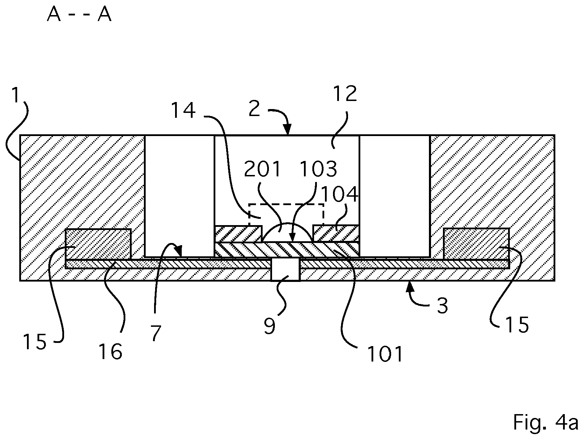

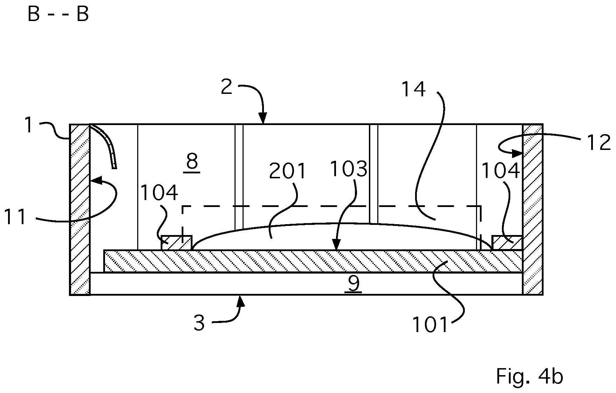

Es ist in Fig. 2 zu erkennen, dass der Probenträger 101 derart auf der Auflageoberfläche 7 in der Ausnehmung 4 liegt, dass der Probenträger 101 in horizontaler Lage in der Ausnehmung 4 liegt. Die Proben-Flächenseite 102 befindet sich ebenfalls in horizontaler Lage und ist der Auflageoberfläche abgewandt. Damit befindet sich eine Probe 201 in einem Teilgebiet des Innenraumes der Ausnehmung 4, das sich oberhalb des hydrophilen Bereiches 103 der Proben-Flächenseite 102 befindet (siehe Fig. 4a und 4b). Dieses Teilgebiet ist der Probenbereich. Der Probenbereich liegt in dem Magnetfeldbereich 14 (mit Strichlinie umgebener Bereich in Fig. 4a und 4b), der von einer Magnetfeldeinrichtung erzeugt wird, die in dem Grundkörper 1 angeordnet ist. Die Magnetfeldeinrichtung besteht aus zwei Magneten 15, die im unteren Bereich des Grundkörpers 1 angeordnet sind, und zwar jeweils zwischen einer Stirnseite der zweiten quaderförmigen Ausnehmung 6 und der gegenüberliegenden Seitenwand des Grundkörpers 1. Mittels Magnetfeldleitern 16 wird das Magnetfeld, das von den Magneten 15 erzeugt wird, unter den Probenträger 101 geführt. Dazu erstrecken sich die Magnetfeldleiter 16 in dem Grundkörper an dessen Unterseite 3 jeweils von einem Magnet 15 in Richtung der Lichtdurchtrittsöffnung 9.

Es ist in Fig. 2 zu erkennen, dass die Längsachse des hydrophilen Bereiches 103 parallel zur Lichtdurchtrittsöffnung 9 verläuft, und zwar in einer Ebene senkrecht zur Oberseite 2 und Unterseite 3 des Grundkörpers 1. Es ist in Fig. 2 ferner zu erkennen, dass die Ausnehmung 4 eine Tiefe aufweist, die die Stärke des Probenträgers übersteigt.

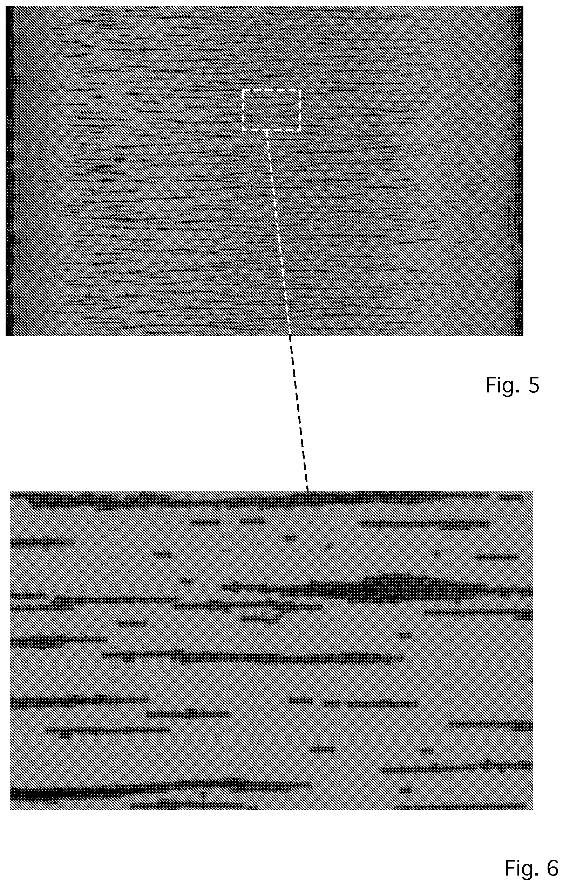

Die Figuren 5 und 6 zeigen vergrößerte Ausschnitte einer Aufnahme von einer Probe, die mittels eines bildgebenden Systems erhalten wurden. Bei der Probe handelte es sich um eine Zellkultur von Zellen, die an magnetischen Partikeln hafteten und in einem wässerigen Medium suspendiert waren. Die Probe wurde auf den in Fig. 3 gezeigten Probenträger 101 aufgebracht, wobei sich die Probe im hydrophilen Bereich 103 der Proben-Flächenseite 102 des Probenträger 101 sammelte. Der Probenträger 101 wurde in die in Fig. 1 gezeigte Vorrichtung eingesetzt, wodurch die in Fig. 2 gezeigte Anordnung erhalten wurde. Anschließend wurden Vorrichtung und Probenträger in die entsprechende Aufnahme eines Mikroskops eingesetzt und eine Aufnahme angefertigt, von der ein vergrößerter Ausschnitt in Fig. 5 und ein nochmals vergrößerter Ausschnitt aus dem in Fig. 5 gezeigten Ausschnitt in Fig. 6 gezeigt wird. Fig. 5 veranschaulicht die Ausrichtung der magnetischen Partikel im Magnetfeld der Vorrichtung. In Fig. 6 ist die Immobilisierung und Anreicherung der mit den magnetischen Partikeln verbundenen Zellen im Beobachtungsbereich zu erkennen.

### Bezugszeichenliste

- 1: Grundkörper
- 2: Oberseite
- 3: Unterseite
- 4: Ausnehmung
- 5: erste quaderförmige Ausnehmung
- 6: zweite quaderförmige Ausnehmung
- 7: Auflageoberfläche
- 8: Längswandung
- 9: Lichtdurchtrittsöffnung
- 10: Federelement
- 11: erste Stirnseite
- 12: zweite Stirnseite
- 13: verbreiterter Abschnitt
- 14: Magnetfeldbereich
- 15: Magnet
- 16: Magnetfeldleiter

- 101: Probenträger
- 102: Proben-Flächenseite
- 103: hydrophiler Bereich
- 104: hydrophober Bereich
- 105: Längskante
- 106: Querkante

- 201: Probe

## Patentansprüche

1. Vorrichtung zum Einsetzen in ein bildgebendes System, wobei die Vorrichtung aufweist:
eine Aufnahme (4) für einen Probenträger (101) für eine Probe (201),
eine Einrichtung zur Erzeugung eines magnetischen Feldes in einem Bereich (14) der Aufnahme (4) für den Probenträger (101),
einen Grundkörper (1), wobei an einer Oberseite (2) eine Ausnehmung (4) ausgebildet ist, die die Aufnahme für den Probenträger (101) bildet,
wobei die Einrichtung zur Erzeugung eines magnetischen Feldes in dem Grundkörper (1) angeordnet ist **dadurch gekennzeichnet,**
**dass** die Einrichtung zur Erzeugung eines magnetischen Feldes ferner Magnetfeldleiter (16) umfasst, die
sich unterhalb einer Flächenseite des Probenträgers (101) erstrecken, um so eine Immobilisierung der Probe (201) auf dem Probenträger (101) zu erlauben.

2. Vorrichtung nach Anspruch 1, **dadurch gekennzeichnet, dass** die Ausnehmung (4) einen rechteckigen, kreisförmigen oder kreuzförmigen Querschnitt aufweist.

3. Vorrichtung nach Anspruch 1 oder Anspruch 2, **dadurch gekennzeichnet, dass** die Ausnehmung (4) von einer Auflageoberfläche (7) für den Probenträger (101) begrenzt ist, wobei die Auflageoberfläche (7) von der Oberseite (2) und der Unterseite (3) des Grundkörpers (1) beabstandet ist und wobei sich eine Öffnung (9), die den Durchtritt von Licht gestattet, von der Unterseite (3) des Grundkörpers (1) bis zur Auflageoberfläche (7) erstreckt.

4. Vorrichtung nach einem der Ansprüche 1 bis 3, **dadurch gekennzeichnet, dass** an dem Grundkörper (1) Führungselemente zum Einsetzen der Vorrichtung in das bildgebende System an einer vorgegebenen Position ausgebildet sind.

5. Vorrichtung nach einem der Ansprüche 1 bis 4, **dadurch gekennzeichnet, dass** die Ausnehmung (4) einen im Wesentlichen kreuzförmigen Querschnitt mit einer ersten quaderförmigen Ausnehmung (5) und einer die erste quaderförmige Ausnehmung (5) orthogonal kreuzenden zweiten quaderförmigen Ausnehmung (6) aufweist, wobei die Breite und Länge der ersten quaderförmigen Ausnehmung (5) derart gewählt ist, dass der Probenträger (101) in die erste quaderförmige Ausnehmung (5) eingelegt werden kann.

6. Vorrichtung nach Anspruch 5, **dadurch gekennzeichnet, dass** die Breite der ersten quaderförmigen Ausnehmung (5) so bemessen ist, dass die Längswandungen (8) der ersten quaderförmigen Ausnehmung (5) an den Längskanten (105) des Probenträgers (101) anliegen, wenn der Probenträger (101) in die erste quaderförmige Ausnehmung (5) eingelegt ist.

7. Vorrichtung nach einem der vorstehenden Ansprüche, **dadurch gekennzeichnet, dass** sie ein Fixierungselement (10) zur Fixierung des Probenträgers (101) in der Aufnahme (4) aufweist.

8. Vorrichtung nach einem der vorstehenden Ansprüche, **dadurch gekennzeichnet, dass** die Einrichtung zur Erzeugung eines magnetischen Feldes einen oder mehrere Dauermagneten (15), eine oder mehrere Elektromagneten umfasst oder Kombinationen davon.

9. Anordnung, umfassend eine Vorrichtung nach einem der Ansprüche 1 bis 8 sowie einen Probenträger (101), wobei der Probenträger (101) eine Flächenseite (102), auf der zumindest ein hydrophiler Bereich (103) und zumindest ein hydrophober Bereich (104) ausgebildet sind, aufweist.

10. Anordnung nach Anspruch 9 **dadurch gekennzeichnet, dass** die Flächenseite (102) des Probenträgers (101) eine Beschichtung aus einem hydrophoben Material aufweist, die den hydrophoben Bereich (104) bildet.

11. Anordnung nach Anspruch 9 oder Anspruch 10, **dadurch gekennzeichnet, dass** der Magnetfeldbereich (14) auf den Probenbereich begrenzt ist, der durch den oder die hydrophilen Bereiche (103) der Proben-Flächenseite des Probenträgers (101) bestimmt wird.

12. Kit, umfassend eine Anordnung nach einem der Ansprüche 9 bis 11, wobei in dem Kit mehrere der Probenträger enthalten sind.

13. Bildgebendes System mit einer Aufnahme für eine Vorrichtung gemäß einem der Ansprüche 1 bis 8.

14. Verfahren zur Analyse biologischer und/oder chemischer, magnetische Partikel enthaltender Proben, wobei das Verfahren die Schritte umfasst:
(a) Aufbringen der Probe (201) auf einen Probenträger (101);
(b) Einlegen des Probenträgers in die Aufnahme einer Vorrichtung gemäß einem der Ansprüche 1 bis 8;
(c) Einsetzen der Vorrichtung in die Aufnahme eines bildgebenden Systems gemäß Anspruch 12; und
(d) Analyse der Probe (201) unter Verwendung des bildgebenden Systems.

## Claims

1. Apparatus for insertion into an imaging system, the apparatus having:
a receptacle (4) for a sample holder (101) for a sample (201),
a device for generating a magnetic field in a region (14) of the receptacle (4) for the sample holder (101),
a main body (1), a recess (4) which forms the receptacle for the sample holder (101) being formed in an upper face (2),
the device for generating a magnetic field being arranged in the main body (1), **characterized in that** the device for generating a magnetic field further comprises magnetic field conductors (16) which extend beneath a flat face of the sample holder (101) so as to allow the sample (201) to be immobilized on the sample holder (101).

2. Apparatus according to claim 1, **characterized in that** the recess (4) has a rectangular, circular or cruciform cross section.

3. Apparatus according to either claim 1 or claim 2, **characterized in that** the recess (4) is delimited by a support surface (7) for the sample holder (101), the support surface (7) being spaced apart from the upper face (2) and the lower face (3) of the main body (1), and an opening (9) which allows the passage of light extending from the lower face (3) of the main body (1) to the support surface (7).

4. Apparatus according to any of claims 1 to 3, **characterized in that** guide elements for inserting the device into the imaging system are formed on the main body (1) at a predetermined position.

5. Apparatus according to any of claims 1 to 4, **characterized in that** the recess (4) has a substantially cruciform cross section having a first cuboid recess (5) and a second cuboid recess (6) orthogonally crossing the first cuboid recess (5), the width and length of the first cuboid recess (5) being selected such that the sample holder (101) can be inserted into the first cuboid recess (5).

6. Apparatus according to claim 5, **characterized in that** the width of the first cuboid recess (5) is dimensioned such that the longitudinal walls (8) of the first cuboid recess (5) rest against the longitudinal edges (105) of the sample holder (101) when the sample holder (101) is inserted into the first cuboid recess (5).

7. Apparatus according to any of the preceding claims, **characterized in that** it has a securing element (10) for securing the sample holder (101) in the receptacle (4).

8. Apparatus according to any of the preceding claims, **characterized in that** the device for generating a magnetic field comprises one or more permanent magnets (15), one or more electromagnets, or combinations thereof.

9. Arrangement comprising an apparatus according to any of claims 1 to 8 and a sample holder (101), wherein the sample holder (101) has a flat face (102) on which at least one hydrophilic region (103) and at least one hydrophobic region (104) are formed.

10. Arrangement according to claim 9, **characterized in that** the flat face (102) of the sample holder (101) has a coating made of a hydrophobic material which forms the hydrophobic region (104).

11. Arrangement according to either claim 9 or claim 10, **characterized in that** the magnetic field region (14) is limited to the sample region which is defined by the hydrophilic region(s) (103) of the sample flat face of the sample holder (101).

12. Kit, comprising an arrangement according to any of claims 9 to 11, wherein a plurality of the sample holders are contained in the kit.

13. Imaging system comprising a receptacle for an apparatus according to any of claims 1 to 8.

14. Method for analyzing biological and/or chemical samples containing magnetic particles, wherein the method comprises the steps of:
(a) applying the sample (201) to a sample holder (101);
(b) inserting the sample holder into the receptacle of an apparatus according to any of claims 1 to 8;
(c) inserting the apparatus into the receptacle of an imaging system according to claim 12; and
(d) analyzing the sample (201) using the imaging system.

## Revendications

1. Dispositif destiné à être inséré dans un système d'imagerie, le dispositif présentant :
un réceptacle (4) pour un porte-échantillon (101) pour un échantillon (201),
un appareil destiné à générer un champ magnétique dans une zone (14) du réceptacle (4) pour le porte-échantillon (101),
un corps de base (1), un évidement (4) étant réalisé sur une face supérieure (2) et
formant le réceptacle pour le porte-échantillon (101),
l'appareil destiné à générer un champ magnétique étant disposé dans le corps de base (1), **caractérisé en ce que** l'appareil destiné à générer un champ magnétique comprend en outre des conducteurs de champ magnétique (16) qui s'étendent en dessous d'une face de surface du porte-échantillon (101) afin de permettre l'immobilisation de l'échantillon (201) sur le porte-échantillon (101).

2. Dispositif selon la revendication 1, **caractérisé en ce que** l'évidement (4) présente une section transversale rectangulaire, circulaire ou cruciforme.

3. Dispositif selon la revendication 1 ou la revendication 2, **caractérisé en ce que** l'évidement (4) est délimité par une surface d'appui (7) pour le porte-échantillon (101), la surface d'appui (7) étant espacée de la face supérieure (2) et de la face inférieure (3) du corps de base (1) et une ouverture (9), qui permet le passage de la lumière, s'étendant depuis la face inférieure (3) du corps de base (1) jusqu'à la surface d'appui (7).

4. Dispositif selon l'une des revendications 1 à 3, **caractérisé en ce que** des éléments de guidage destinés à l'insertion du dispositif dans le système d'imagerie sont réalisés à une position prédéfinie sur le corps de base (1).

5. Dispositif selon l'une des revendications 1 à 4, **caractérisé en ce que** l'évidement (4) présente une section transversale sensiblement cruciforme comportant un premier évidement cubique (5) et un second évidement cubique (6) traversant orthogonalement le premier évidement cubique (5), la largeur et la longueur du premier évidement cubique (5) étant choisies de telle sorte que le porte-échantillon (101) peut être inséré dans le premier évidement cubique (5).

6. Dispositif selon la revendication 5, **caractérisé en ce que** la largeur du premier évidement cubique (5) est dimensionnée de telle sorte que les parois longitudinales (8) du premier évidement cubique (5) reposent contre les bords longitudinaux (105) du porte-échantillon (101) lorsque le porte-échantillon (101) est inséré dans le premier évidement cubique (5).

7. Dispositif selon l'une des revendications précédentes, **caractérisé en ce qu'**il présente un élément de fixation (10) destiné à fixer le porte-échantillon (101) dans le réceptacle (4).

8. Dispositif selon l'une des revendications précédentes, **caractérisé en ce que** l'appareil destiné à générer un champ magnétique comprend un ou plusieurs aimants permanents (15), un ou plusieurs électro-aimants ou leurs combinaisons.

9. Agencement comprenant un dispositif selon l'une des revendications 1 à 8 ainsi qu'un porte-échantillon (101), dans lequel le porte-échantillon (101) présente une face de surface (102) sur laquelle au moins une zone hydrophile (103) et au moins une zone hydrophobe (104) sont réalisées.

10. Agencement selon la revendication 9, **caractérisé en ce que** la face de surface (102) du porte-échantillon (101) présente un revêtement en un matériau hydrophobe qui forme la zone hydrophobe (104).

11. Agencement selon la revendication 9 ou la revendication 10, **caractérisé en ce que** la zone de champ magnétique (14) est limitée à la zone d'échantillon qui est déterminée par la ou les zones hydrophiles (103) de la face de surface d'échantillon du porte-échantillon (101).

12. Kit, comprenant un agencement selon l'une des revendications 9 à 11, plusieurs porte-échantillons étant contenus dans le kit.

13. Système d'imagerie comportant un réceptacle pour un dispositif selon l'une des revendications 1 à 8.

14. Procédé destiné à analyser des échantillons biologiques et/ou chimiques contenant des particules magnétiques, le procédé comprenant les étapes consistant à :
(a) amener l'échantillon (201) sir un porte-échantillon (101) ;
(b) insérer le porte-échantillon dans le réceptacle d'un dispositif selon l'une des revendications 1 à 8 ;
(c) insérer le dispositif dans le réceptacle d'un système d'imagerie selon la revendication 12 ; et
(d) analyser l'échantillon (201) à l'aide du système d'imagerie.
